# EUROPÄISCHE PATENTSCHRIFT

(11) **EP 1 206 637 B1**
(45) Veröffentlichungstag und Bekanntmachung des Hinweises auf die Patenterteilung: **17.05.2006**
(21) Anmeldenummer: 00956402.2
(22) Anmeldetag: 05.08.2000
(51) Int. Cl.: F02M 35/14, F02M 35/024

(54) **LUFTFILTER**
AIR FILTER
FILTRE A AIR

(30) Priorität: 27.08.1999 DE 19940610
(43) Veröffentlichungstag der Anmeldung: 22.05.2002
(73) Patentinhaber: Mann + Hummel GmbH, 71638 Ludwigsburg (DE)
(72) Erfinder: SPANNBAUER, Helmut, 71696 Möglingen (DE); FREISINGER, Jürgen, 71679 Asperg (DE)
(74) Vertreter: Voth, Gerhard
(86) Internationale Anmeldenummer: PCT/EP2000/007619
(87) Internationale Veröffentlichungsnummer: WO 2001/016477

(56) Entgegenhaltungen:
- EP-A- 0 186 754
- DE-A- 1 951 123
- DE-A- 3 011 294
- GB-A- 1 045 309
- US-A- 5 649 986
- "FLEXI.SYSTEM AIR BOX/FILTER" RESEARCH DISCLOSURE,GB,INDUSTRIAL OPPORTUNITIES LTD. HAVANT, Bd. 401, 1. September 1997 (1997-09-01), Seite 601 XP000726784 ISSN: 0374-4353

## Beschreibung

Die Erfindung betrifft ein Luftfilter nach dem Oberbegriff des Patentanspruches 1. Außerdem betrifft die Erfindung ein Verfahren zur Herstellung des oben genannten Luftfilters.

Bekanntlich gelten für alle Fahrzeuge Vorschriften über eine maximal zulässige Geräuschemission. Daher sind die Fahrzeughersteller gehalten möglichst geräuscharme Fahrzeuge zu bauen. Durch die geringe Schallabstrahlung des Fahrzeuges und hohe Schallisolierung des Fahrgastinnenraumes, erhält der Fahrer meist nur über den Drehzahlmesser eine Information über den Betriebszustand des Motors. Dies wird von vielen Fahrern als unangenehm empfunden.

Das Dokument DE 1 951 123 offenbart einen Luftfilter für Kraftfahrzeuge. Der Luftfilter verfügt über ein Gehäuseunterteil und ein Gehäuseoberteil, wobei ein Filterelement in den Gehäuseteilen angeordnet ist. Das Gehäuseoberteil verfügt über eine Öffnung, welche durch ein elastisches Kappenteil überdeckt ist. Das elastische Kappenteil besteht aus einem mechanisch verformbaren Kunststoff, welcher nach der mechanischen Belastung wieder in seine Ausgangsposition zurückfedert.

Es ist aus der DE 197 04 376 A 1 eine Luftfilteranordnung bekannt, welche über eine akustisch wirkende Leitung vom Luftfilter zum Fahrgastinnenraum verfügt. Diese Leitung soll Geräusche in den Fahrgastinnenraum übertragen und den Fahrer über den Betriebszustand des Motors informieren. Die Leitung wird von einer Membran luftdicht abgesperrt, welche im Betrieb in Schwingungen versetzt wird und diese Schwingungen an den Fahrgastinnenraum überträgt. Nachteilig ist bei dieser Lösung der Einsatz eines zusätzlichen Bauteils, welches durch den Motorraum bis zum Fahrgastraum bzw. Fahrerraum geführt werden muß. Der hierzu notwendige Einbauraum steht bei der komplexen Bauweise der heutigen Fahrzeuge nur begrenzt zur Verfügung, außerdem erhöht sich das Teilegewicht der Baugruppe.

Die Aufgabe der Erfindung besteht darin, ein Hilfsmittel zu schaffen, mit dessen Hilfe sich das Ansauggeräusch beeinflussen läßt, ohne daß sich das Teilegewicht oder Einbauvolumen wesentlich verändert. Diese Aufgabe wird durch die Merkmale des Patentanspruches 1 gelöst.

Das erfindungsgemäße Luftfilter ist in vorteilhafter Weise geeignet, Schall so zu übertragen, daß der Fahrer eine ausreichende Information über den Betriebszustand des Motors erhält. Hierzu dient die, in die Gehäusewand integrierte Membran, welche mehr Schall abstrahlt, als die Gehäusewand selbst. Durch geeignetes Anordnen der Membranen, z.B. auf den Motor gerichtet, kann eine Reduzierung des Ansauggeräusches erreicht werden. Die Membran ist dichtend mit der Gehäusewand verbunden und stellt somit einen Teil der Begrenzung für einen Filterinnenraum dar, sie ist so an bzw. in die Gehäusewand einzubringen, daß in jedem Betriebszustand eine ausreichende Dichtheit des Luftfilters gewährleistet ist. Hierbei ist zu beachten, daß das Luftfilter dynamisch, in Form von Luftdruckwechseln, belastet wird und sich die Membran in keinem Betriebszustand von der Gehäusewand lösen oder Leckluftströme zulassen. darf. Dazu kann die Membran von außen oder innen auf die Gehäusewand aufgebracht sein, bei jeder Variante sind ausreichend viele Befestigungspunkte vorzusehen, welche die Membran mit der Gehäusewand verbinden. Weiterhin ist die Membran so ausgelegt, daß sie durch die durchströmende Luft, welche vom Einlaß kommend durch ein Filterelement zum Auslaß strömt, in Schwingungen versetzt wird. Diese Schwingungen werden auf umliegende Bauteile im Motorraum übertragen und schließlich in den Fahrgastinnenraum, bzw. Fahrerraum geleitet. Je nach Bedarf und erwünschten Sound können mehrere Membranen vorgesehen werden, weiche unterschiedliche Formen und Größen aufweisen können. Mögliche Formvarianten stellt die Verwendung von eckigen oder ovalen Membranen dar, welche Wirkflächenverschiedener Ausführungen besitzen können.

Die Membran kann durch Aufkleben dichtend mit der Gehäusewand verbunden werden. Besteht die Membran aus dem selben Material, wie das Filtergehäuse, sc kann die Membran mit dem Filtergehäuse einteilig ausgeführt sein, wodurch mögliche undichte Stellen vermieden und Montagearbeitsgänge eingespart werden können. Eine Besondere Fertigungsmethode stellt dabei das Spritzgießverfahren dar.

Eine vorteilhafte Ausbildung des Erfindungsgedankens ist die Verwendung von Membranen mit runden Wirkflächen, da diese besonders gut zu Schwingungen angeregt werden können. Denkbar sind dabei Varianten, bei denen eckige Membranen in das Gehäuse eingebracht werden, aber die Wirkflächen selbst runde Konturen aufweisen.

Gemäß einer weiteren Ausgestaltung der Erfindung kann die Membran unterschiedlich dicke Wandstärken aufweisen. Dabei ist es vorteilhaft, die Randbereiche der Membran dünn und die Mittenbereiche dick auszuführen. Dadurch erreicht man, daß die Membran schnell zu Schwingungen angeregt werden kann, aber durch den dickeren Mittenbereich eine ausreichende Masse zur Verfügung hat, welche die Schwingungen übertragen kann.

Es ist vorteilhaft, die Membran wellenförmig aufzubauen, wodurch die Membran leichter schwingen kann. Hierbei stellt die Ausführung der Membran mit einem wellenförmig ausgebildeten Randbereich und einem ebenen Mittenbereich eine besonders vorteilhafte Lösung dar. Hier kann der wellenförmige Randbereich Schwingungen erzeugen, welche dann von dem ebenen Mittenbereich abgestrahlt werden. Durch diese Ausführung sind beste Ergebnisse bei der Schallerzeugung und -übertragung zu erzielen.

Eine besondere Ausführungsform stellt die Anordnung der Membran auf einer Stirnseite des Luftiltergehäuses dar. Dabei wird als Stirnseite die Seite bezeichnet, auf welche der Luftstrom auftrifft, wenn er das Luftfiltermedium durchströmt hat, dadurch wird die Membran direkt angeströmt und zu Schwingungen angeregt. Somit kann durch diese Ausführung eine optimale Schallübertragung erfolgen.

Zum Einbringen der Membran in das Filtergehäuse ist es vorteilhaft, Aufnahmen im Filtergehäuse vorzusehen. Diese Aufnahmen dienen z.B. zum Einklipsen mehrerer Befestigungspunkte der Membran in das Filtergehäuse, wobei eine ausreichende Dichtung vorgesehen ist, oder zum Eindrücken der Membran in eine Nut am Filtergehäuse, die umlaufend die Membran aufnimmt und so eine dichtende Verbindung der Bauteile bewirkt. Weitere Aufnahmen können derart gestaltet sein, daß die Schmelze der Membran in diese eindringt und so eine formschlüssige Verbindung der Membran mit dem Filtergehäuse bewirkt. Hierbei ist die Ausbildung der Aufnahme in Form von kegeligen Bohrungen denkbar, wobei sich der Kegel nach der, der Membran gegenüberliegenden, Seite öffnet und so ein zerstörungsfreies Herausfallen der Membran verhindert.

Ein Verfahren zur Fertigung der Membran und des Filtergehäuses stellt das Spritzgießen dar. Hierbei kann das Filtergehäuse an einem anderen Ort gefertigt werden, wie die Membran, außerdem kann für jedes Bauteil ein individueller Werkstoff gewählt werden. Anschließend werden die Teile zusammengefügt. Eine bevorzugte Variante stellt die Fertigung der Membran und des Filtergehäuses aus dem selben Material und in einem Arbeitsgang dar. Hierbei unterscheidet sich der Bereich der Membran nur in Form und Wandstärke von der Filtergehäusewand. Bei dieser Ausführung ist keine Leckage zu erwarten, da keine Bauteilgrenzen zwischen der Membran und dem Filtergehäuse besteht.

Eine weitere Fertigungsvariante besteht darin, die Membran in ein bestehendes Filtergehäuse einzuspritzen. Hierbei bildet das Filtergehäuse einen Teil der Kavität für die Membran. Bei diesem Fertigungsverfahren ist eine optimale Paßform der Membran in dem Filtergehäuse realisiert. Desweiteren kann die Membran derart eingespritzt sein, daß eine unlösbare Verbindung zwischen der Membran und dem Filtergehäuse erzeugt wird.

Ein besonders vorteilhaftes Fertigungsverfahren stellt das Zwei-Komponenten-Spritzgießverfahren dar. Hierbei werden beide Bauteile, Filtergehäuse und Membran, in einem Werkzeug hergestellt. Nachdem zuerst das Filtergehäuse gespritzt wurde, weichen Schieber zurück und geben die Kavität für die Membran frei. Durch dieses Fertigungsverfahren erhält man nach dem Entformen ein fertiges Bauteil.

### Zeichnungen

Weitere Einzelheiten der Erfindung werden in den Zeichnungen anhand von schematischen Ausführungsbeispielen beschrieben.

### Hierbei zeigt

- Figur 1: ein Luftfilter in der Draufsicht,
- Figur 2: eine Membran im Schnitt,
- Figur 3: eine Aufnahme im Schnitt,
- Figur 4: ein Luftfilter im Schnitt als Prinzipskizze.

In Figur list ein Luftfilter 10 in der Draufsicht dargestellt. Dieses Luftfilter 10 wird im wesentlichen durch ein Luftfiltergehäuse 11 gebildet, welches einen Einlaß 12 und einen Auslaß 13 besitzt. Da das Luftfiltergehäuse 11 aus mehreren Formteilen besteht, sind Verbindungsstellen 14 zur Fixierung der Formteile aufeinander und Rippen 15 zur Versteifung vorgesehen. In das Luftfiltergehäuse 11 sind zwei Membranen 16 eingebracht. Sie sind schallweicher als das Luftfiltergehäuse 11 und strahlen somit mehr Schall von der Filterinnenseite in den Motorraum ab. Das Luftfiltergehäuse 11 kann aus einem talkumverstärkten Polypropylen z.B. PPT20 gefertigt sein und die Membran 16 aus einem thermoplastischen Elastomer. Beide Bauteile 11,16 sind im Spritzgießverfahren hergestellt und anschließend miteinander, unter Verwendung eines Klebstoffes, zusammengefügt worden.

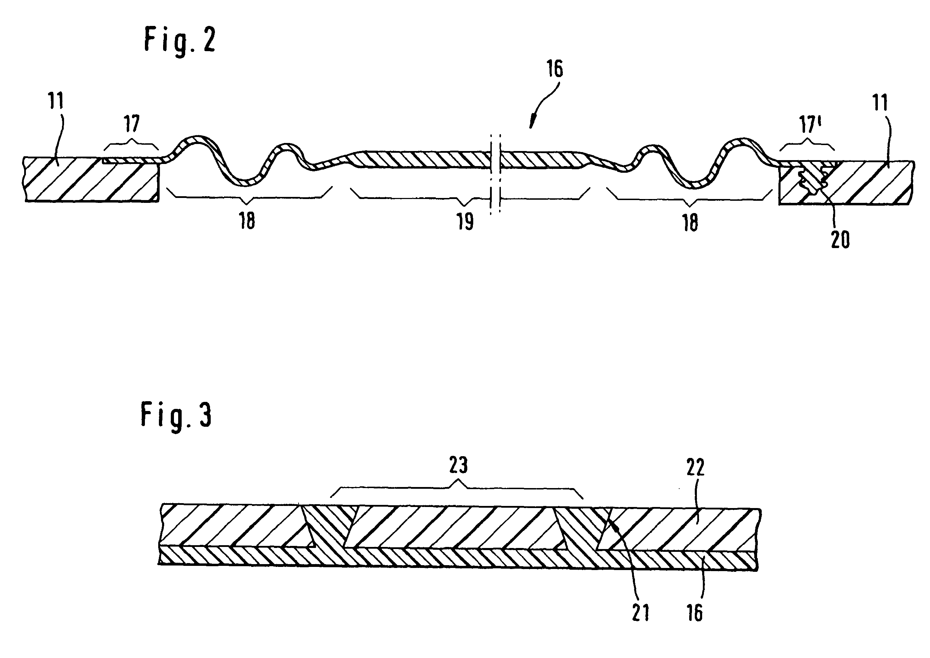

In Figur 2 ist eine Membran 16 im Schnitt dargestellt, wobei zwei Befestigungsvarianten dargestellt sind. Die Membran weist einen umlaufenden Befestigungsbereich 17, einen wellenförmigen Schwingbereich 18 und eine verstärkte Wirkfläche 19 auf. Der wellenförmige Schwingbereich 18 dient dazu, die Wirkfläche 19 zu halten und zu Schwingungen anzuregen, dazu weist der wellenförmige Schwingbereich 18 eine geringere Wandstärke, als die Wirkfläche 19 auf.

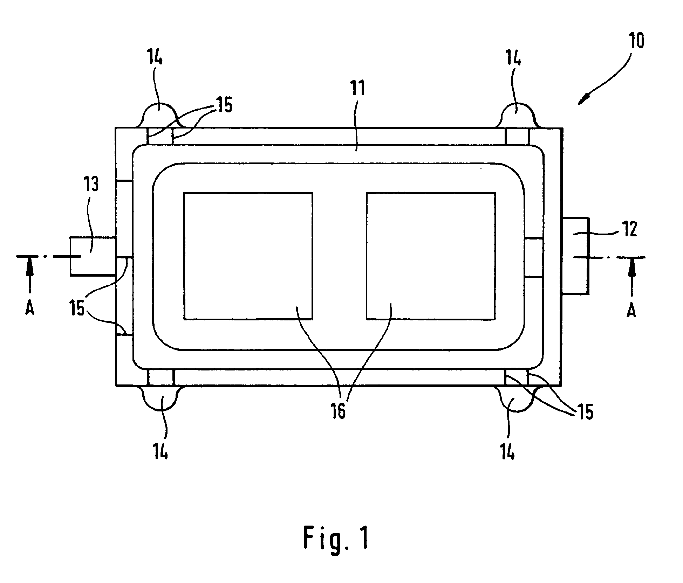

Auf der linken Bildhälfte ist der Befestigungsbereich 17, welcher mit Klebstoff an dem Luftfiltergehäuse 11 gemäß Figur 1 befestigt werden kann, dargestellt.

Auf der rechten Bildhälfte ist der Befestigungsbereich 11' mit einer Dichtlippe 20 dargestellt. Diese Dichtlippe 20 wird in eine umlaufende Nut im Luftfiltergehäuse 11 gemäß Figur 1 eingedrückt.

In Figur 3 ist eine Aufnahme im Schnitt dargestellt. Bei diesem Ausführungsbeispiel wird die Aufnahme durch konische Bohrungen 21 gebildet, welche in einer Gehäusewand 22 des Luftfiltergehäuses 11 gemäß Figur 1 eingebracht sind und von der Schmelze ausgefüllt werden. Nachdem die Schmelze erstarrt ist, kann die Membran 16 nicht mehr zerstörungsfrei aus dem Filtergehäuse 11 entfernt werden. Die konischen Bohrungen 21 werden in bestimmten Abständen 23 angeordnet, dabei ist darauf zu achten, daß sich die Membran 16 bei keinem Betriebszustand von dem Luftfiltergehäuse 11 löst und Luft entweichen kann.

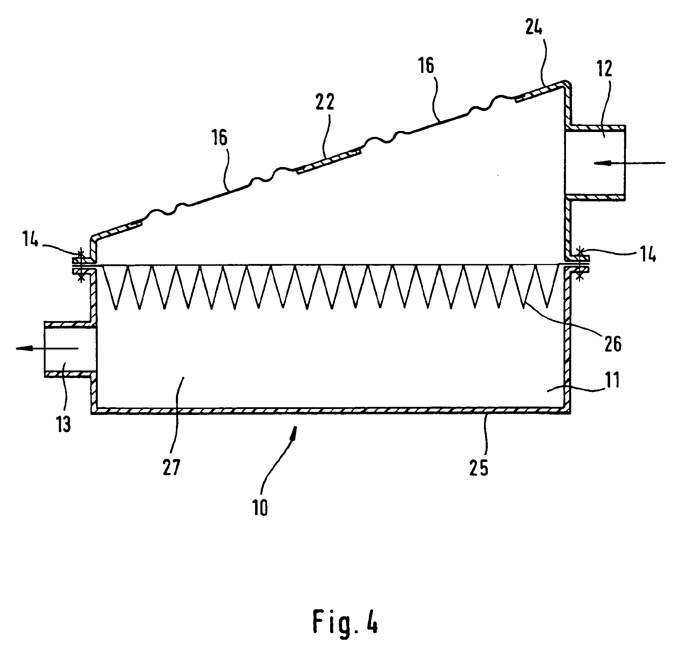

In Figur 4 ist ein Luftfilter 10 im Schnitt, entlang der Schnittlinie A-A gemäß Figur 1 in einer Prinzipskizze dargestellt. Das Luftfilter 10 umfaßt im wesentlichen ein zweiteiliges Luftfiltergehäuse 11, welches durch eine obere Formhälfte 24 und eine untere Formhälfte 25 gebildet wird und einen Filterraum 27 umschließt. Die obere Formhälfte 24 weist einen Einlaß 12 und zwei, in die obere Formhälfte 24 eingebrachte Membranen 16 auf, welche wellenförmig ausgeführt sind. Die untere Formhälfte 25 enthält einen Auslaß 12. Zwischen die obere und untere Formhälfte 24, 25 ist ein Filtereinsatz 26 dichtend eingebracht. Zur Befestigung der beiden Formhälften aufeinander sind die Verbindungsstellen 14 verschraubt.

## Patentansprüche

1. Luftfilter (10) für eine Brennkraftmaschine, aufweisend zumindest ein Luftfiltergehäuse (11), welches mit einer Gehäusewand (22) einen Filterraum (27) umschließt, einen Einlaß (12) und einen Auslaß (13), in die Gehäusewand (22) mindestens eine Membran (16) eingebracht ist, welche schallweicher ist, als die Gehäusewand (22) **dadurch gekennzeichnet, dass** die Membran (16) über unterschiedlich dicke Wandstärken verfügt.

2. Luftfilter (10) nach Anspruch 1, **dadurch gekennzeichnet, daß** die Membran (16) eine runde Wirkfläche (19) aufweist.

3. Luftfilter (10) nach einem der vorangehenden Ansprüche, **dadurch gekennzeichnet, daß** die Membran (16) wellenförmig aufgebaut ist.

4. Luftfilter (10) nach einem der Ansprüche 1 oder 2, **dadurch gekennzeichnet, daß** die Membran (16) über einen wellenförmigen Schwingbereich (18) am Rand und eine ebene Wirkfläche (19) in der Mitte verfügt.

5. Luftfilter (10) nach einem der vorangehenden Ansprüche, **dadurch gekennzeichnet, daß** die Membran (16) auf einer Stirnseite des Filtergehäuses (11) angeordnet ist.

6. Luftfilter (10) nach einem der vorangehenden Ansprüche, **dadurch gekennzeichnet, dass** das Filtergehäuse (11) Aufnahmen zur formschlüssigen Verbindung zwischen Filtergehäuse (11) und Membran (16) aufweist.

## Claims

1. Air filter (10) for an internal combustion engine, said air filter including at least one air filter housing (11) which encloses a filter space (27) with a housing wall (22), an inlet (12) and an outlet (13), at least one diaphragm (16) being inserted into the housing wall (22), said diaphragm being more permeable to sound than the housing wall (22), **characterised in that** the diaphragm (16) has varying wall thicknesses.

2. Air filter (10) according to claim 1, **characterised in that** the diaphragm (16) includes a round effective area (19).

3. Air filter (10) according to one of the preceding claims, **characterised in that** the diaphragm (16) is undulated.

4. Air filter (10) according to one of claims 1 or 2, **characterised in that** the diaphragm (16) has an undulating oscillating region (18) at the edge and a flat effective area (19) in the centre.

5. Air filter (10) according to one of the preceding claims, **characterised in that** the diaphragm (16) is disposed on an end face of the filter housing (11).

6. Air filter (10) according to one of the preceding claims, **characterised in that** the filter housing (11) includes receiving means for the positive connection between the filter housing (11) and the diaphragm (16).

## Revendications

1. Filtre à air (10) pour un moteur à combustion interne, comprenant au moins un boîtier de filtre à air (11), qui entoure une chambre de filtre (27) avec une paroi de boîtier (22), une entrée (12) et une sortie (13), et dans la paroi de boîtier (22) est montée au moins une membrane (16), plus sensible au son que la paroi de boîtier (22),
**caractérisé en ce que**
la membrane (16) comporte des zones d'épaisseurs différentes.

2. Filtre à air (10) selon la revendication 1,
**caractérisé par** que
la membrane (16) présente une surface active ronde (19).

3. Filtre à air (10) selon l'une quelconque des revendications précédentes,
**caractérisé par**
une membrane (16) ondulée.

4. Filtre à air (10) selon l'une quelconque des revendications 1 ou 2,
**caractérisé en ce que**
la membrane (16) comprend une zone de bordure vibrante ondulée (18) et une surface centrale active plane (19).

5. Filtre à air (10) selon l'une quelconque des revendications précédentes,
**caractérisé par**
une membrane (16) disposée sur un côté frontal du boîtier de filtre (11).

6. Filtre à air (10) selon l'une quelconque des revendications précédentes,
**caractérisé en ce que**
le boîtier de filtre (11) présente des logements pour un assemblage par complémentarité de forme entre le boîtier de filtre (11) et la membrane (16).
